# EUROPÄISCHE PATENTSCHRIFT

(11) **EP 3 325 832 B1**
(45) Veröffentlichungstag und Bekanntmachung des Hinweises auf die Patenterteilung: **18.09.2019**
(21) Anmeldenummer: 16738060.9
(22) Anmeldetag: 08.06.2016
(51) Int. Cl.: F16C 33/64, B21D 53/10, B21K 1/04

(54) **VERFAHREN ZUM SPANLOSEN FERTIGEN EINES LAGERRINGS FÜR EIN WÄLZLAGER SOWIE WÄLZLAGER MIT DEM LAGERRING**
METHOD FOR NON-CUTTING MANUFACTURING OF A BEARING RING FOR A ROLLING BEARING AND ROLLING BEARING COMPRISING THE BEARING RING
PROCÉDÉ DE FABRICATION SANS ENLÈVEMENT DE COPEAUX D'UNE BAGUE DE PALIER POUR UN PALIER À ROULEMENT ET PALIER À ROULEMENT COMPRENANT LA BAGUE DE PALIER

(30) Priorität: 23.07.2015 DE 102015213967
(43) Veröffentlichungstag der Anmeldung: 30.05.2018
(73) Patentinhaber: Schaeffler Technologies AG & Co. KG, 91074 Herzogenaurach (DE)
(72) Erfinder: KICK-RODENBÜCHER, Reinhard, 90455 Nürnberg (DE); EIDLOTH, Rainer, 91074 Herzogenaurach (DE); MANTAU, Markus, 90617 Puschendorf (DE)
(86) Internationale Anmeldenummer: PCT/DE2016/200269
(87) Internationale Veröffentlichungsnummer: WO 2017/012615

(56) Entgegenhaltungen:
- DE-A1- 1 938 165
- DE-A1-102007 027 216
- JP-A- H1 019 060

## Beschreibung

Die Erfindung betrifft ein Verfahren zum Fertigen eines Lagerrings für ein Wälzlager, wobei der Lagerring eine Laufbahnseite mit mindestens einer Laufbahn und eine Anlageseite zur Anlage an eine Tragstruktur aufweist und wobei der Lagerring eine Hauptachse des Wälzlagers definiert, wobei der Lagerring auf der Anlageseite mindestens einen Konturabschnitt aufweist und wobei der Lagerring durch Umformen aus einem Lagerringrohling gefertigt wird. Die Erfindung betrifft auch ein Wälzlager mit mindestens einem Lagerring, wobei der Lagerring durch das Verfahren gefertigt ist.

Wälzkörperlager weisen in vielen Bauformen einen Innenring, einen Außenring sowie eine Mehrzahl zwischen Innenring und Außenring abwälzend angeordnete Wälzkörper auf. Der Innenring und der Außenring sind sehr oft spanend aus Vollmaterial gefertigt. Derartige Massivringe haben den Vorteil einer großen Eigensteifigkeit sowie einer niedrigen Fertigungstoleranz. Allerdings ist die Fertigung der Massivringe aufgrund des benötigten Halbzeugs und aufgrund des Fertigungsverfahrens teuer. Vor diesem Hintergrund wurde bereits vorgeschlagen, Ringe eines Wälzkörperlagers spanlos herzustellen.

Beispielsweise offenbart die Druckschrift DE 10 2007 027 216 A1, die wohl den nächstkommenden Stand der Technik bildet, ein Verfahren zur spanlosen Herstellung eines Wälzlagers. Bei dem Verfahren ist vorgesehen, dass aus einem Blech zwei Ringabschnitte abgetrennt werden, welche jedoch über Stützstege miteinander verbunden bleiben. In einem nachfolgenden Fertigungsschritt werden auf einer Stirnseite der Ringabschnitte Einprägungen in Form von Ringnuten eingebracht. In einem nachfolgenden Schritt erfolgt ein Tiefziehen, wobei während des Tiefziehvorgangs die Ringnuten zu Laufbahnen des Wälzlagers werden und zudem die Wälzkörper eingelegt werden. Im Ergebnis wird die Form der Laufbahnen durch die Einprägungen vor dem Tiefziehvorgang festgelegt.

Die DE 19 38 165 A1 beschreibt eine Fertigung von Wälzlagerringen aus Flachstahl. Dabei werden Kreisringe aus Platinen ausgestanzt und nachfolgend durch Ziehen in eine zylinderförmige Form überführt. Eine Laufrille für Wälzkörper kann vorher in einen solchen Kreisring eingepresst werden.

Es ist Aufgabe der vorliegenden Erfindung, ein Verfahren zum Fertigen eines Lagerrings für ein Wälzlager vorzuschlagen, welches besonders kostengünstig umsetzbar ist. Diese Aufgabe wird durch ein Verfahren mit den Merkmalen des Anspruchs 1 sowie durch ein Wälzlager mit den Merkmalen des Anspruchs 13 gelöst. Bevorzugte oder vorteilhafte Ausführungsformen der Erfindung ergeben sich aus den Unteransprüchen, der nachfolgenden Beschreibung sowie den beigefügten Figuren.

Der Gegenstand der Erfindung ist somit ein Verfahren zum Fertigen eines Lagerrings für ein Wälzlager. Das Wälzlager ist insbesondere als ein Radialwälzlager ausgebildet. Der Lagerring kann als ein Innenring oder als ein Außenring ausgebildet sein. Ergänzend hierzu kann sowohl der Innenring als auch der Außenring erfindungsgemäß gefertigt sein. Besonders bevorzugt ist der Lagerring aus Metall, insbesondere aus Stahl, gefertigt.

In der allgemeinsten Ausprägung der Erfindung kann das Wälzlager eine beliebige Art von Wälzkörpern, insbesondere Kugeln oder Rollen, aufweisen. Es ist jedoch bevorzugt, dass die Wälzkörper als Kugeln ausgebildet sind. Insbesondere handelt es sich bei dem Wälzlager um ein Rillenkugellager, im Speziellen um ein einreihiges Wälzlager.

Der Lagerring weist eine Laufbahnseite mit mindestens einer Laufbahn für die Wälzkörper auf. Ferner weist der Lagerring eine Anlageseite zur Anlage an einer Tragstruktur auf wobei der Lagerring auf der Anlageseite mindestens einen Konturabschnitt aufweist. Für den Fall, dass der Lagerring als ein Innenring ausgebildet ist, weist die Laufbahnseite radial nach außen und die Anlageseite radial nach innen. Wenn der Lagerring als ein Außenring ausgebildet ist, weist die Laufbahnseite radial nach innen und die Anlageseite nach außen. Der Lagerring kann z.B. wahlweise in eine Ausnehmung als Tragstruktur eingesteckt werden oder auf eine Achse oder Welle als Tragstruktur aufgeschoben werden.

Es ist vorgesehen, dass der Lagerring eine Hauptachse des Wälzlagers definiert. Entweder definiert der Lagerring die Hauptachse durch die Eigenrotation oder durch die Bewegung der abwälzenden Wälzkörper auf dem Lagerring. Besonders bevorzugt ist die Laufbahnseite und/oder die Anlageseite als eine Zylindermantelfläche ausgebildet, in die die nachfolgend beschriebenen Bereiche eingearbeitet sind. Insbesondere handelt es sich um eine gerade Zylindermantelfläche, welche koaxial und/oder konzentrisch zu der Hauptachse ausgerichtet ist.

Ein Verfahrensschritt des erfindungsgemäßen Verfahrens ist es, dass ein Lagerringrohling umgeformt wird, um den Lagerring zu fertigen. Somit umfasst das erfindungsgemäße Verfahren mindestens den Umformschritt zur Überführung von dem Lagerringrohling in den Lagerring. Durch das Umformen wird die Geometrie des Lagerrings durch die Werkzeuggeometrie des Umformwerkzeugs vorgegeben, so dass auch eine Herstellung von normalerweise komplizierten bzw. aufwändigen spanenden Oberflächen leicht und reproduzierbar umsetzbar ist.

Es ist vorgesehen, dass der Lagerringrohling vor dem Umformen ein Oberflächenprofil aufweist, das in dem Lagerringrohling ausgebildet wird, wobei das Oberflächenprofil nach dem Umformen den mindestens einen Konturabschnitt in der Anlageseite des Lagerrings ausbildet. Das Oberflächenprofil ist vorzugsweise umformtechnisch in den Lagerringrohling eingebracht. Das Oberflächenprofil ist z.B. als eine Einprägung oder bei tieferen Oberflächenprofilen bereits durch ein Fliesspressen, insbesondere Kaltfließpressen, gefertigt. Alternativ hierzu kann das Oberflächenprofil angeformt sein, insbesondere derart, dass dieses über die Anlageseite, im Speziellen über die Zylindermantelfläche vorsteht. Auch eine Mischform des angeformten und des eingeformten Oberflächenprofils kann vorgesehen sein.

Es ist eine Überlegung der Erfindung, dass bei spanlos hergestellten Lagerringen in das Halbzeug, insbesondere in den Lagerringrohling, nicht nur Einprägungen oder Einformungen für die Laufbahn vorgesehen sein können, sondern es auch möglich ist, das Oberflächenprofil einzubringen, welches nach dem Umformen den Konturabschnitt in der Anlageseite des Lagerrings bildet. Damit können funktionale Bereiche in der Anlageseite des Lagerrings kostengünstig bereits durch ein Oberflächenprofil in dem Lagerringrohling umgesetzt werden. Insgesamt erlaubt das erfindungsgemäße Verfahren eine kostengünstige Fertigung des Lagerrings und damit des Wälzlagers.

Bei einer bevorzugten Ausgestaltung der Erfindung bildet der Konturabschnitt ein die Hauptachse teilweise, abschnittsweise oder vollständig umlaufendes Profil. Insbesondere ist der Konturabschnitt als ein Nutenabschnitt und damit als eine, die Hauptachse teilweise, abschnittsweise oder vollständig umlaufende Nut ausgebildet. So liegt es im Rahmen der Erfindung, dass der Konturabschnitt sich nur in einem Winkelsegment um die Hauptachse erstreckt. Es kann auch vorgesehen sein, dass der Konturabschnitt in axialer Richtung ausgerichtet ist. Auch ist es möglich, dass mehrere Konturabschnitte eingebracht sind. Es ist jedoch besonders bevorzugt, dass der Konturabschnitt eine vollständig umlaufende, insbesondere in Umfangsrichtung um die Hauptachse geschlossene, Nut ausbildet. Die Nut kann beispielsweise als eine Haltenut zur Montage oder als eine Ölumlaufnut ausgebildet sein. Prinzipiell kann der Konturabschnitt für eine beliebige funktionale Struktur auf der Tragstruktur genutzt werden.

Bei einer besonders bevorzugten Ausgestaltung der Erfindung ist der Konturabschnitt als eine Hinterschnittkontur, insbesondere als eine Hinterschneidung, ausgebildet. Die Hinterschnittkontur ist in Bezug auf beide axialen Richtungen zu der Hauptachse ausgebildet. Diese Ausgestaltung unterstreicht nochmals den erfinderischen Gedanken, das Oberflächenprofil bereits in den Lagerringrohling einzubringen. Bei dem Lagerringrohling sind die Flächen, welche später die Anlageseite des Lagerrings bildet, frei zugänglich, sodass eine beliebige Struktur insbesondere eingebracht, insbesondere eingeprägt, werden kann. Erst nach dem Umformvorgang ist das Oberflächenprofil als der Konturabschnitt so angeordnet, dass dieser die Hinterschnittkontur bildet. Somit eröffnet das erfindungsgemäße Verfahren ein kostengünstiges Einbringen des Konturabschnitts an einer Position, die während des Umformschritts fertigungstechnisch schwer zu erreichen ist.

Alternativ oder ergänzend ist der Konturabschnitt als eine Erhebungskontur ausgebildet, welche über die Anlageseite übersteht. In dieser Alternative wird in gleicher Weise wie bei der Hinterschnittkontur ausgenutzt, dass der Konturabschnitt nicht durch das Werkzeug eingebracht wird, welches das Umformen bewirkt, sondern bereits in den Lagerringrohling als das Oberflächenprofil eingebracht wurde. Das Umformen ist insbesondere als ein Umklappen oder Biegen von der Form des Lagerringrohlings in den Lagerring ausgebildet.

Vorzugsweise ist die Hinterschnittkontur als eine oder mehrere vollständig, teilweise oder abschnittsweise umlaufende Nut ausgebildet. Alternativ kann die Hinterschnittkontur als eine Tasche, Vertiefung, Riffelung etc. ausgebildet sein. In der Ausbildung als Erhebungskontur kann diese als ein vollständig, teilweise oder abschnittsweise umlaufender Wulst, insbesondere Steg, als eine oder mehrere Hügel etc. ausgebildet sein.

Dabei ist es insbesondere auch möglich, eine solche Erhebungskontur aus einem Kunststoff an den Lagerringrohling anzuspritzen und anschließend den Lagerringrohling zum Lagerring umzuformen, insbesondere mittels Kaltfließpressens.

Dabei können am umzuformenden Lagerringrohling Hinterschnittkonturen und/oder Erhebungskonturen vorhanden sein.

Besonders bevorzugt sind eine Konturtiefe der Hinterschnitttkontur und/oder eine Konturhöhe der Erhebungskontur größer als 0,5 mm ausgebildet. Die Konturhöhe bzw. Konturtiefe wird in Bezug auf eine Zylindermantelfläche gemessen, welche durch die Anlageseite definiert ist.

Bei einer bevorzugten Realisierung der Erfindung ist das Umformen als ein Kaltumformen, insbesondere Kaltfließpressen, ausgebildet. Bei dem Kaltumformen ist die Temperatur in dem Werkstück, in diesem Fall in dem Lagerringrohling oder in dem Lagerring, niedriger als die Rekristallisationstemperatur des Grundmaterials des Werkstücks. Insbesondere wird bei dem Kaltumformen der Lagerringrohling bei Umgebungs- oder Raumtemperatur, vorzugsweise bei einer Temperatur von kleiner als 50 Grad, dem Umformvorgang zugeführt. Während des Umformens ist es jedoch möglich, dass höhere Temperaturen aufgrund der Umformarbeit in dem Lagerringrohling beziehungsweise in dem dann entstehenden Lagerring auftreten, wobei jedoch auch die höheren Temperaturen unter der Rekristallisationstemperatur des Grundmaterials liegen. Es ist von Vorteil, dass durch das Umformen, insbesondere das Kaltumformen, Oberflächenspannungen in dem Lagerring erzeugt werden, die zu einer Leistungssteigerung führen.

Bei einer bevorzugten Realisierung der Erfindung ist der Lagerringrohling als eine Ringscheibe ausgebildet, wobei das Oberflächenprofil auf einer ersten Stirnseite der Ringscheibe umformtechnisch eingebracht ist oder wird. Die Ringscheibe ist vorzugsweise aus einem Blech mit einer Dicke kleiner als 10 Millimeter und/oder vorzugsweise größer als 2 Millimeter herausgetrennt. Es ist möglich, dass zunächst die Ringscheibe ausgeschnitten und dann das Oberflächenprofil eingebracht wird. Es ist jedoch auch möglich, dass zunächst das Oberflächenprofil eingebracht wird und danach die Ringscheibe mit dem Oberflächenprofil abgetrennt wird.

In einer bevorzugten Weiterbildung der Erfindung weist die Ringscheibe ein weiteres Oberflächenprofil auf einer zweiten Stirnseite auf. Die zweite Stirnseite ist gegenüberliegend zu der ersten Stirnseite angeordnet. Das weitere Oberflächenprofil ist so gestaltet, dass dieses nach dem Umformen die Laufbahn bildet.

Besonders bevorzugt ist das weitere Oberflächenprofil als eine weitere Hinterschnittkontur ausgebildet, insbesondere ausgeformt. In dieser Ausgestaltung wird wieder genutzt, dass die entsprechende Stirnseite des Lageringrohlings für ein Werkzeug zum Einbringen des Weiteren Oberflächenprofils frei zugänglich ist, so dass unabhängig von dem späteren Umformen in den Lagerring auch die weitere Hinterschnittkontur eingebracht werden kann. Insbesondere ist das weitere Oberflächenprofil als eine Ringnut ausgebildet. Diese resultiert nach dem Umformen des Lagerringrohlings in den Lagerring in eine Laufbahn, insbesondere Rillenlaufbahn, für Kugeln als Wälzkörper.

Bei einer bevorzugten Realisierung der Erfindung wird die Endform des Konturabschnitts, insbesondere eines Nutenabschnitts, durch das Oberflächenprofil, insbesondere die Einformung und/oder Anformung, und das Umformen und/oder die Endform der Laufbahn durch das weitere Oberflächenprofil, insbesondere die weitere Einformung und das Umformen gebildet. Das Querschnittprofil des Konturabschnitts wird vorzugsweise durch das Querschnittprofil des Oberflächenprofils in Zusammenwirkung mit dem Umformen gebildet. In gleicher Weise wird das Querschnittprofil der Laufbahn vorzugsweise durch das Querschnittprofil des Weiteren Oberflächenprofils in Zusammenwirkung mit dem Umformen gebildet.

Insbesondere ermöglicht das erfindungsgemäße Verfahren eine endkonturnahe Fertigung bzw. Endformfertigung (net-shape-manufacturing), im Speziellen von der Laufbahn und/oder von dem Konturabschnitt.

Bei Weiterbildungen der Erfindung weist das Wälzlager einen Außenring und einen Innenring auf, wobei der Außenring und/oder der Innenring als der Lagerring ausgebildet ist bzw. sind. Es ist besonders bevorzugt, dass ein Lagerringrohling des Innenrings aus einem Innenbereich eines Blechabschnitts für einen Lagerringrohling des Außenrings gefertigt ist. Auf diese Weise kann das Wälzlager mit dem erfindungsgemäß gefertigten mindestens einen Lagerring sehr kostengünstig hergestellt werden.

Optional ergänzend kann der Lagerring einsatzgehärtet oder durchgehärtet werden.

Ein weiterer Gegenstand der Erfindung betrifft ein Wälzlager mit mindestens einem Lagerring, der nach dem erfindungsgemäßen Verfahren erfindungsgemäß gefertigt ist. Das Wälzlager ist vorzugsweise wie zuvor beschrieben ausgebildet.

Das erfindungsgemäße Wälzlager umfasst mindestens einen Lagerring, wobei der Lagerring nach dem erfindungsgemäßen Verfahren gefertigt ist, wobei der Lagerring eine Laufbahnseite aufweist, wobei auf der Laufbahnseite mindestens eine Laufbahn für Wälzkörper angeordnet ist, wobei der Lagerring eine Anlageseite zur Anlage des Lagerrings an eine Tragstruktur aufweist, und, wobei der Lagerring durch ein Umformen, insbesondere Kaltfließpressen, aus einem Lagerringrohling gefertigt ist, wobei der Lagerring auf der Anlageseite mindestens einen Konturabschnitt aufweist, wobei der Konturabschnitt durch ein Oberflächenprofil, das in dem Lagerringrohling gebildet wurde, ausgebildet ist.

Es ist vorgesehen, dass der Lagerring eine Laufbahnseite aufweist, wobei auf der Laufbahnseite eine oder mehrere Laufbahnen für Wälzkörper des Wälzlagers angeordnet ist/sind. Ferner weist der Lagerring eine Anlageseite zur Anlage des Lagerrings an eine Tragstruktur, wie eine Achse oder Welle für den Innenring oder ein Gehäuse für den Außenring, auf. Der Lagerring ist durch einen Umformvorgang, insbesondere durch Kaltfließpressen, aus einem Lagerringrohling gefertigt.

Ein derartiges Wälzlager ist besonders kostengünstig herstellbar. Insbesondere weisen die Lagerringe des erfindungsgemäßen Wälzlagers keine spanend bearbeiteten Oberflächen auf. Insbesondere aber wir im Bereich der Laufflächen und des Konturabschnitts der Lagerringe keine spanende Nachbearbeitung vorgenommen, sondern die nach dem Umformen vorliegenden Oberflächen unmittelbar im Wälzlager eingesetzt. Dadurch sind die Kosten für das Wälzlager wesentlich geringer als bei herkömmlichen Wälzlagern.

Erfindungsgemäß ist vorgesehen, dass der Lagerring auf der Anlageseite mindestens einen Konturabschnitt aufweist, wobei der Konturabschnitt durch ein Oberflächenprofil in dem Lagerringrohling gebildet ist. Somit hat der Konturabschnitt als das Oberflächenprofil bereits vor dem Umformvorgang existiert. Die Herstellung des Wälzlagers, insbesondere des mindestens einen Lagerrings, kann anhand von Herstellspuren an dem mindestens einen Lagerring auch beim Wälzlager als Endprodukt nachgewiesen werden.

Es ist besonders bevorzugt, dass der Lagerringrohling als eine Ringscheibe ausgebildet ist, welche in eine Hülse umgeformt wird. Dabei bildet die erste Stirnseite der Ringscheibe eine Außenmantelfläche und die zweite Stirnseite der Ringscheibe eine Innenmantelfläche des Lagerrings.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren. Dabei zeigen:
Figur 1 eine schematische Längsschnittdarstellung eines Wälzlagers als ein Ausführungsbeispiel der Erfindung;
Figur 2 eine schematische Längsschnittdarstellung eines Verfahrens zum Fertigen eines Lagerrings, wobei der Lagerring als ein Außenring ausgebildet ist;
Figur 3 eine schematische Längsschnittdarstellung eines Verfahrens zum Fertigen eines Lagerrings, wobei der Lagerring als ein Innenring ausgebildet ist;
Figuren 4a, b, c, d vier verschiedene Ausführungsbeispiele der Erfindung für einen Lagerring sowie den zugrundeliegenden Lagerringrohling, wobei jeweils auf der linken Seite eine Draufsicht auf einen Lagerringrohling und der rechten Seite jeder Darstellung ein Schnitt durch den daraus gebildeten Lagerring dargestellt sind.

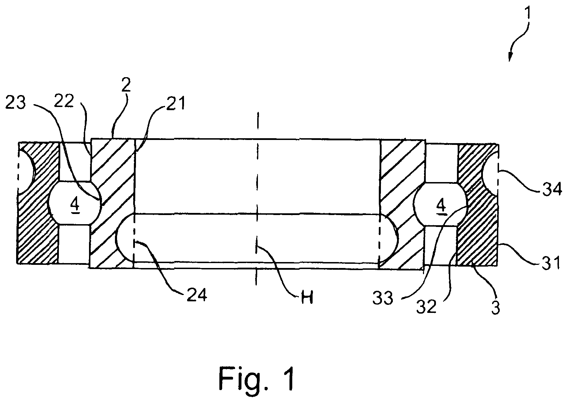

Die Figur 1 zeigt in einer schematischen Längsschnittdarstellung ein Wälzlager 1 als ein Ausführungsbeispiel der Erfindung. Das Wälzlager 1 weist einen Innenring 2 und einen Außenring 3 auf, wobei der Außenring 3 koaxial und konzentrisch zu dem Innenring 2 angeordnet ist. Der Innenring 2 und der Außenring 3 bilden jeweils einen Lagerring des Wälzlagers 1. Das Wälzlager 1 weist eine Hauptachse H auf, welche durch eine Rotationsachse des Innenrings 2 und/oder des Außenrings 3 definiert ist.

Das Wälzlager 1 ist als ein Rillenkugellager mit einer Rille 4 für Kugeln als Wälzkörper ausgebildet. Allerdings wurde auf die Darstellung der Wälzkörper hier verzichtet. Das Wälzlager 1 ist als ein Radialwälzlager realisiert. Prinzipiell ist es möglich, dass - wie gezeigt - das Wälzlager 1 einreihig ausgebildet ist, alternativ kann das Wälzlager 1 auch mehrreihig ausgebildet sein.

Der Innenring 2 weist eine Anlageseite 21 sowie eine Laufbahnseite 22 auf. Die Anlageseite 21 ist radial nach innen gerichtet und in der Grobform als eine gerade Zylindermantelfläche ausgebildet, welche koaxial und konzentrisch zu der Hauptachse H ausgerichtet ist. Die Laufbahnseite 22 ist koaxial und konzentrisch zu der Anlageseite 21 ausgerichtet und in der Grobform als eine gerade Zylindermantelfläche ausgebildet. Die Anlagefläche 21 dient zur Anlage an einer Tragstruktur, wie zum Beispiel an einer Achse oder an einer Welle.

Der Außenring 3 weist eine Anlageseite 31 sowie eine Laufbahnseite 32 auf. Die Anlageseite 31 und die Laufbahnseite 32 sind in der Grobform jeweils als Zylindermantelflächen ausgebildet, welche koaxial und/oder konzentrisch zueinander und/oder zu der Hauptachse H ausgerichtet sind. Die Anlageseite 31 dient zur Anlage an einer Tragstruktur, wie zum Beispiel an einer Ausnehmung oder Bohrung in einem Gehäuse.

Auf der Laufbahnseite 22 des Innenrings 2 und auf der Laufbahnseite 32 des Außenrings 3 ist jeweils eine Laufbahn 23 und 33 eingeformt, welche gemeinsam die Rille 4 bilden. Die Laufbahnen 23 und 33 bilden Vertiefungen in der Zylindermantelfläche der Laufbahnseite 22 des Innenrings 2 beziehungsweise in der Laufbahnseite 32 des Außenrings 3.

Auf der Anlageseite 21 des Innenrings 2 ist ein als umlaufende Nut ausgebildeter Konturabschnitt 24 eingeformt. Die umlaufende Nut ist in Bezug auf eine bzw. beide axiale Richtungen zu der Hauptachse H als eine Hinterschnittkontur ausgebildet. Insbesondere befindet sich die umlaufende Nut in einem Innenbereich der Anlageseite 21 des Innenrings 2.

Alternativ oder ergänzend ist in der Anlageseite 31 des Außenrings 3 eine weitere Nut als ein Konturabschnitt 34 eingebracht. Auch die weitere Nut ist in einem Innenbereich der Anlageseite 31 des Außenrings 3 angeordnet. Auch die weitere Nut bildet in Bezug auf die Hauptachse H in den axialen Richtungen eine Hinterschnittkontur. Die Konturabschnitte 24 und/oder 34 können z.B. als eine Haltenut oder als eine Ölumlaufnut ausgebildet sein.

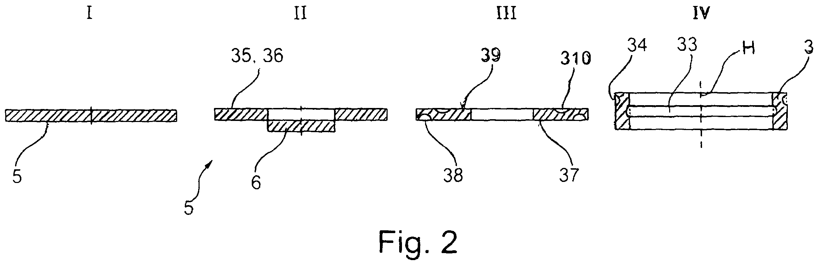

Die Fertigung des Außenrings 3 als einer der Lagerringe des Wälzlagers 1 ist in der Figur 2 in verschiedenen Schritten im Längsschnitt dargestellt:
In einem Schritt I wird aus einem Blech eine Ronde 5 getrennt, insbesondere ausgestanzt. In einem Schritt II wird aus der Ronde 5 ein Mittelteil 6 ausgetrennt, insbesondere ausgestanzt, sodass eine Ringscheibe 35 als ein Lagerringrohling 36 gebildet wird.

In einem Schritt III wird auf einer ersten Stirnseite 37, welche in der Figur 2 nach unten gerichtet ist, ein Oberflächenprofil 38 in Form einer die Hauptachse H umlaufende Ringnut als eine Einformung eingebracht, insbesondere eingeformt, im Speziellen eingeprägt. Beispielsweise zeitgleich oder zeitlich versetzt hierzu wird auf einer zweiten Stirnseite 39 eine weiteres Oberflächenprofil 310 eingebracht, insbesondere als Einformung eingeformt, im Speziellen eingeprägt, welche ebenfalls als eine umlaufende Ringnut ausgebildet ist. Es kann vorgesehen sein, dass der Schritt II und der Schritt III vertauscht sind, oder dass die Einformungen bereits in die Ronde 5 oder sogar in das Blech als Halbzeug eingeprägt werden, bevor die Ronde 5 abgetrennt wird.

In einem Schritt IV wird der Lagerringrohling 36 umgeformt, wobei das Umformen als ein Kaltumformen, insbesondere Kaltfließpressen, ausgebildet ist. Insbesondere wird der Lagerringrohling 36 nicht erwärmt und/oder bei Umgebungstemperatur oder Raumtemperatur umgeformt. Es ist insbesondere vorgesehen, dass die Umformung mit einer Temperatur unterhalb der Rekristallisationstemperatur des Blechs erfolgt. Durch den Umformvorgang wird der als Ringscheibe 35 ausgebildete Lagerringrohling 36 in eine Hülse umgeformt, in die bereits auf Basis des Weiteren Oberflächenprofils 310 die Laufbahn 33 und auf Basis des Oberflächenprofils 38 ein Konturabschnitt 34 in Form einer Nut eingebracht ist, vergleiche auch Figur 1.

Es ist zu unterstreichen, dass die Form der Laufbahn 33 und der weiteren Nut durch das Einformen in dem vorhergehenden Schritt, insbesondere dem Schritt III, und das Umformen in dem Schritt IV und insbesondere ohne weitere formgebende Maßnahme erfolgt. Im Speziellen entspricht die Oberfläche der Laufbahn 33 der, insbesondere nicht spanend nachbearbeiteten, Oberfläche des Weiteren Oberflächenprofils 310 und/oder die Oberfläche der weiteren Nut der Oberfläche des Oberflächenprofils 38.

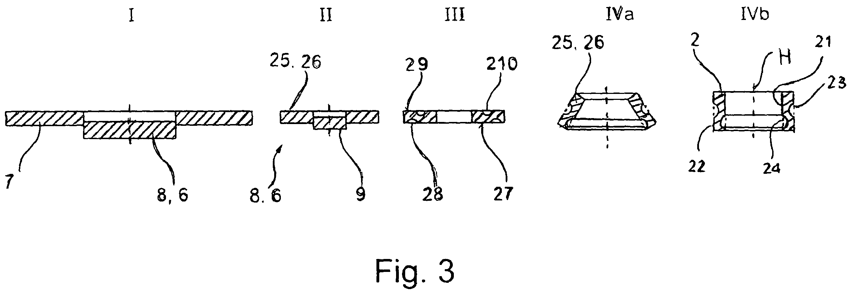

In der Figur 3 ist in ähnlicher Weise das Verfahren zur Fertigung des Innenrings 2 als Lagerring des Wälzlagers 1 im Längsschnitt gezeigt.

In einem Schritt I wird aus einem Blech 7 eine Ronde 8 ausgetrennt. Alternativ hierzu wird als Ronde 8 das Mittelteil 6 aus dem vorher beschriebenen Verfahren zur Ausbildung des Außenrings 3 gemäß Figur 2 verwendet. In diesem Fall können der Innenring 2 und der Außenring 3 in einer Mutter-Kind-Fertigung aus dem gleichen Bereich eines Blechs 7 gefertigt werden.

In einem Schritt II wird aus der Ronde 8 und/oder dem Mittelteil 6 eine weitere Ringscheibe 25 durch ein Trennen, insbesondere Ausstanzen von einem Mittelteil 9 erzeugt. Die Ringscheibe 25 bildet den Grundkörper für einen Lagerringrohling 26 für den Innenring 2.

In einem Schritt III werden in gleicher Weise wie bei dem Außenring 3 auf einer ersten Stirnseite 27 ein Oberflächenprofil 28 eingeformt, insbesondere eingeprägt. Ferner wird auf der zweiten Stirnseite 29 ein weiteres Oberflächenprofil 210 eingeformt, insbesondere eingeprägt. Das Oberflächenprofil 28 bildet später den Konturabschnitt 24 in Form einer Nut, das weitere Oberflächenprofil 210 bildet später die Laufbahn 23. des Innenrings 2. Die Oberflächenprofile 28 und 210 sind jeweils als Ringnuten ausgebildet.

In einem Schritt IVa und IVb erfolgt ein Umformvorgang, welcher als ein Kaltumformvorgang, insbesondere ein Kaltfließpressen, ausgebildet ist und wobei die Ringscheibe 25 als der Lagerringrohling 26 in den Innenring 2 umgeformt oder umgeklappt wird. Dabei wird die Laufbahn 23 auf der Laufbahnseite 22 des Innenrings 2 und der Konturabschnitt 24 auf der Anlageseite 21 des Innenrings 2 ausgebildet.

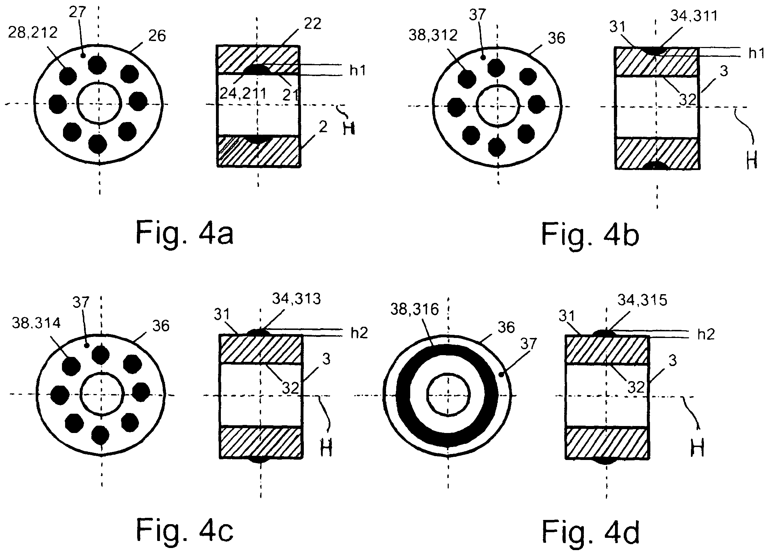

Die Figuren 4 a - d zeigen jeweils einen Lagerringrohling 26 bzw. 36 mit einem Oberflächenprofil 28 bzw. 38 sowie den daraus resultierenden Lagerring 2 bzw. 3 mit dem Konturabschnitt 24 bzw. 34. Dabei sind jeweils auf der linken Seite eine Draufsicht auf einen Lagerringrohling 26 bzw. 36 und der rechten Seite jeder Darstellung ein Schnitt durch den daraus gebildeten Lagerring 2 bzw. 3 dargestellt.

So zeigt die Figur 4a auf der rechten Seite einen Innenring 2 mit einem Konturabschnitt 24 auf der Anlageseite 21, wobei der Konturabschnitt 24 als eine Mehrzahl in Umlaufrichtung um die Hauptdrehachse H verteilte Vertiefungen 211 und damit als eine Hinterschnittkontur ausgebildet ist. Dabei werden lediglich die Vertiefungen 210 auf der Anlageseite 21 in der dargestellten Schnittebene gezeigt. Auf eine Darstellung der weiterhin vorhandenen Vertiefungen 212 auf der Anlageseite 21 wurde im Hinblick auf die Übersichtlichkeit verzichtet. Auf der linken Seite ist der Lagerringrohling 26 gezeigt, wobei dieser auf der ersten Stirnseite 27 ein Oberflächenprofil 28 aufweist, welches als eine Mehrzahl in einem konzentrischen Kreis angeordnete Vertiefungen 212 ausgebildet ist. Die Vertiefungen 212 weisen eine Konturtiefe h1 größer als 0,5 mm auf. Der Innenring 2 ist aus dem Lagerringrohling 26 durch Kaltumformung, insbesondere Kaltfließpressen, gebildet.

Die Figur 4b zeigt - in gleicher Darstellung wie die Figur 4a - auf der rechten Seite einen Außenring 3 mit einem Konturabschnitt 34 auf der Anlageseite 31, wobei der Konturabschnitt 34 als eine Mehrzahl in Umlaufrichtung um die Hauptdrehachse H verteilte Vertiefungen 311 und damit als eine Hinterschnittkontur ausgebildet ist. Auf der linken Seite ist der Lagerringrohling 36 gezeigt, wobei dieser auf der ersten Stirnseite 37 ein Oberflächenprofil 38 aufweist, welches als eine Mehrzahl in einem konzentrischen Kreis angeordnete Vertiefungen 312 ausgebildet ist. Die Vertiefungen 312 weisen eine Konturtiefe h1 größer als 0,5 mm auf. Der Außenring 3 ist aus dem Lagerringrohling 36 durch Kaltumformung, insbesondere Kaltfließpressen, gebildet.

In der Figur 4c ist - in der gleichen Darstellung wie in den Figuren 4a, 4b - ein Außenring 3 dargestellt, welcher im Gegensatz zu dem Ausführungsbeispiel in der Figur 4b Erhöhungen 313 als Konturabschnitt 34 trägt und damit eine Erhebungskontur mit einer Konturhöhe h2 von mindestens 0,5 mm umsetzt. Zur Erzeugung der Erhöhungen 313 weist der Lageringrohling 36 Erhöhungen 314 als Oberflächenprofil 38 auf, die konzentrisch zu einem Mittelpunkt des Lageringrohlings 36 verteilt sind. Die Erhöhungen 314 sind insbesondere durch ein Anspritzen von Kunststoff an den Lagerringrohling 36 ausgebildet. Der Außenring 3 ist aus dem Lagerringrohling 36 durch Kaltumformung, insbesondere Kaltfließpressen, gebildet.

Im Gegensatz zu der Figur 4c trägt der Außenring 3 in der Figur 4d eine durchgehende Wulst 315 als Konturabschnitt 34 in Form einer Erhebungskontur mit der Konturhöhe h2, welche durch eine Wulst 316 als Oberflächenprofil 38 auf dem Lagerringrohling 36 gebildet wurde. Die Wulst 315 ist insbesondere durch ein Anspritzen von Kunststoff an den Lagerringrohling 36 ausgebildet. Der Außenring 3 ist aus dem Lagerringrohling 36 durch Kaltumformung, insbesondere Kaltfließpressen, gebildet.

In den Figuren 4a - d wurde auf eine gesonderte Darstellung der Laufbahnen der Lagerringe verzichtet. Generell können aber Laufbahnen 23, 33 auf der Laufbahnseite 22, 32 (vergleiche Figur 1) zur Aufnahme von Wälzkörpern in Form von Kugeln, Zylinderrollen, Kegelrollen, Nadeln, tonnenförmigen Rollen ausgebildet sein, wobei auch mehrreihige Wälzlager, bei denen Wälzkörper in zwei oder mehr Reihen von gleicher oder unterschiedlicher Art und/oder Größe zum Einsatz kommen können, ausgebildet werden können.

Bei den vier Ausführungsbeispielen in den Figuren 4a - d wird auf den Lagerringrohling 26 bzw. 36 das Oberflächenprofil 28 bzw. 38 auf- oder eingebracht und durch das Umformen des Lagerringrohlings 26 bzw. 36 in den Innenring 2 bzw. Außenring 3 in den Konturabschnitt 24 bzw. 34 überführt.

### Bezugszeichenliste

- 1: Wälzlager
- 2: Innenring
- 21: Anlageseite
- 22: Laufbahnseite
- 23: Laufbahn
- 24: Konturabschnitt
- 25: Ringscheibe
- 26: Lagerringrohling
- 27: erste Stirnseite
- 28: Oberflächenprofil
- 29: zweite Stirnseite
- 210: weiteres Oberflächenprofil
- 211: Vertiefungen
- 212: Vertiefungen
- 3: Außenring
- 31: Anlageseite
- 32: Laufbahnseite
- 33: Laufbahn
- 34: Konturabschnitt
- 35: Ringscheibe
- 36: Lagerringrohling
- 37: erste Stirnseite
- 38: Oberflächenprofil
- 39: zweite Stirnseite
- 310: weiteres Oberflächenprofil
- 311: Vertiefungen
- 312: Vertiefungen
- 313: Erhöhungen
- 314: Erhöhungen
- 315: Wulst
- 316: Wulst
- 4: Rille
- 5: Ronde
- 6: Mittelteil
- 7: Blech
- 8: Ronde
- 9: Mittelteil
- H: Hauptachse
- h1: Konturtiefe
- h2: Konturhöhe

## Patentansprüche

1. Verfahren zum Fertigen eines Lagerrings (2;3) für ein Wälzlager (1), wobei der Lagerring (2;3) eine Laufbahnseite (22; 32) mit mindestens einer Laufbahn (23;33) und eine Anlageseite (21;31) zur Anlage an eine Tragstruktur aufweist und wobei der Lagerring (2;3) eine Hauptachse (H) des Wälzlagers (1) definiert, wobei der Lagerring (2; 3) auf der Anlageseite (21; 31) mindestens einen Konturabschnitt (24; 34) aufweist und wobei der Lagerring (2;3) durch Umformen aus einem Lagerringrohling (26;36) gefertigt wird, **dadurch gekennzeichnet, dass** der Lagerringrohling (26;36) vor dem Umformen ein Oberflächenprofil (28;38) aufweist, das in dem Lagerringrohling (26; 36) ausgebildet wird, wobei das Oberflächenprofil (28;38) nach dem Umformen den mindestens einen Konturabschnitt (24;34) in der Anlageseite (21;31) des Lagerrings (2;3) ausbildet.

2. Verfahren nach Anspruch 1, **dadurch gekennzeichnet, dass** der Konturabschnitt (24;34) ein die Hauptachse (H) teilweise, abschnittsweise oder vollständig umlaufendes Profil bildet.

3. Verfahren nach Anspruch 1 oder 2, **dadurch gekennzeichnet, dass** der Konturabschnitt (24;34) als eine Hinterschnittkontur und/oder eine Erhebungskontur in Bezug auf die axiale Richtung der Hauptachse (H) gebildet ist.

4. Verfahren nach Anspruch 3, **dadurch gekennzeichnet, dass** die Hinterschnittkontur mindestens eine umlaufende Nut und/oder mindestens eine Tasche und/oder mindestens eine Vertiefung (211, 311) mit rundem oder rechteckigem Umfang und/oder mindestens eine Riffelung aufweist.

5. Verfahren nach einem der Ansprüche 3 oder 4, **dadurch gekennzeichnet, dass** die Erhebungskontur mindestens einen umlaufenden Wulst (315) und/oder mindestens einen Hügel (313) und/oder mindestens eine Hügelkette aufweist.

6. Verfahren nach einem der Ansprüche 3 bis 5, **dadurch gekennzeichnet, dass** die Hinterschnittkontur des Konturabschnitts (24;34) mit einer Konturtiefe (h1) von mindestens 0,5 mm ausgebildet wird.

7. Verfahren nach einem der Ansprüche 3 bis 6, **dadurch gekennzeichnet, dass** die Erhebungskontur des Konturabschnitts (24;34) mit einer Konturhöhe (h2) von mindestens 0,5 mm ausgebildet wird.

8. Verfahren nach einem der vorhergehenden Ansprüche, **dadurch gekennzeichnet, dass** das Umformen als ein Kaltumformen, insbesondere ein Kaltfließpressen, ausgebildet ist.

9. Verfahren nach einem der vorhergehenden Ansprüche, **dadurch gekennzeichnet, dass** der Lagerringrohling (26; 36) als eine Ringscheibe (25; 35) ausgebildet ist, wobei das Oberflächenprofil (28; 38) auf einer ersten Stirnseite (27; 37) der Ringscheibe (25; 35) eingeformt ist oder wird.

10. Verfahren nach Anspruch 9, **dadurch gekennzeichnet, dass** ein weiteres Oberflächenprofil (210; 310) auf einer zweiten Stirnseite (29; 39) der Ringscheibe (25; 35) eingeformt ist oder wird, wobei das weitere Oberflächenprofil (210; 310) nach dem Umformen die Laufbahn (23; 33) bildet.

11. Verfahren nach Anspruch 10, **dadurch gekennzeichnet, dass** das weitere Oberflächenprofil (210; 310) als mindestens eine weitere Hinterschnittkontur ausgeformt ist oder wird und dass durch die mindestens eine weitere Hinterschnittkontur die mindestens eine Laufbahn (23; 33) ausgebildet wird.

12. Verfahren nach einem der vorhergehenden Ansprüche, **dadurch gekennzeichnet, dass** eine Endform des Konturabschnitts (24; 34) durch das Oberflächenprofil (28; 38) und das Umformen gebildet wird und/oder dass eine Endform der mindestens einen Laufbahn (23; 33) durch das weitere Oberflächenprofil (210; 310) und das Umformen gebildet wird.

13. Wälzlager (1) mit mindestens einem Lagerring (2; 3), wobei der Lagerring (2; 3) nach dem Verfahren nach mindestens einem der vorhergehenden Ansprüche gefertigt ist, wobei der Lagerring (2; 3) eine Laufbahnseite (22; 32) aufweist, wobei auf der Laufbahnseite (22; 32) mindestens eine Laufbahn (23; 33) für Wälzkörper angeordnet ist, wobei der Lagerring (2; 3) eine Anlageseite (21; 31) zur Anlage des Lagerrings (2; 3) an eine Tragstruktur aufweist, und, wobei der Lagerring (2; 3) durch ein Umformen, insbesondere Kaltfließpressen, aus einem Lagerringrohling (26; 36) gefertigt ist,
**dadurch gekennzeichnet, dass**
der Lagerring (2; 3) auf der Anlageseite (21; 31) mindestens einen Konturabschnitt (24; 34) aufweist, wobei der Konturabschnitt (24; 34) durch ein Oberflächenprofil (28; 38), das in dem Lagerringrohling (26; 36) gebildet wurde, ausgebildet ist.

## Claims

1. Method for producing a bearing ring (2; 3) for an anti-friction bearing (1), the bearing ring (2; 3) having a raceway side (22; 32) with at least one raceway (23; 33) and a contact side (21; 31) for contact with a load-bearing structure, and the bearing ring (2; 3) defining a main axis (H) of the anti-friction bearing (1), the bearing ring (2; 3) having at least one contour section (24; 34) on the contact side (21; 31), and the bearing ring (2; 3) being produced from a bearing ring blank (26; 36) by way of forming, **characterized in that**, before the forming, the bearing ring blank (26; 36) has a surface profile (28; 38) which is configured in the bearing ring blank (26; 36), the surface profile (28; 38) configuring, after the forming, the at least one contour section (24; 34) in the contact side (21; 31) of the bearing ring (2; 3) .

2. Method according to Claim 1, **characterized in that** the contour section (24; 34) forms a profile which runs around the main axis (H) partially, in sections or completely.

3. Method according to Claim 1 or 2, **characterized in that** the contour section (24; 34) is formed as an undercut contour and/or an elevation contour in relation to the axial direction of the main axis (H).

4. Method according to Claim 3, **characterized in that** the undercut contour has at least one circumferential groove and/or at least one pocket and/or at least one depression (211, 311) with a round or rectangular circumference, and/or at least one fluted portion.

5. Method according to one of Claims 3 and 4, **characterized in that** the elevation contour has at least one circumferential bead (315) and/or at least one prominence (313) and/or at least one chain of prominences.

6. Method according to one of Claims 3 to 5, **characterized in that** the undercut contour of the contour section (24; 34) is configured with a contour depth (h1) of at least 0.5 mm.

7. Method according to one of Claims 3 to 6, **characterized in that** the elevation contour of the contour section (24; 34) is configured with a contour height (h2) of at least 0.5 mm.

8. Method according to one of the preceding claims, **characterized in that** the forming operation is configured as a cold forming operation, in particular a cold extrusion operation.

9. Method according to one of the preceding claims, **characterized in that** the bearing ring blank (26; 36) is configured as an annular disc (25; 35), the surface profile (28; 38) being formed on a first end side (27; 37) of the annular disc (25; 35).

10. Method according to Claim 9, **characterized in that** a further surface profile (210; 310) is formed on a second end side (29; 39) of the annular disc (25; 35), the further surface profile (210; 310) forming the raceway (23; 33) after the forming.

11. Method according to Claim 10, **characterized in that** the further surface profile (210; 310) is shaped as at least one further undercut contour, and **in that** the at least one raceway (23; 33) is configured by way of the at least one further undercut contour.

12. Method according to one of the preceding claims, **characterized in that** a final shape of the contour section (24; 34) is formed by way of the surface profile (28; 38) and the forming operation, and/or **in that** a final shape of the at least one raceway (23; 33) is formed by way of the further surface profile (210; 310) and the forming operation.

13. Anti-friction bearing (1) having at least one bearing ring (2; 3), the bearing ring (2; 3) being produced in accordance with the method according to at least one of the preceding claims, the bearing ring (2; 3) having a raceway side (22; 32), at least one raceway (23; 33) for rolling bodies being arranged on the raceway side (22; 32), the bearing ring (2; 3) having a contact side (21; 31) for contact of the bearing ring (2; 3) with a load-bearing structure, and the bearing ring (2; 3) being produced from a bearing ring blank (26; 36) by way of a forming operation, in particular cold extrusion, **characterized in that** the bearing ring (2; 3) has at least one contour section (24; 34) on the contact side (21; 31), the contour section (24; 34) being configured by way of a surface profile (28; 38) which has been formed in the bearing ring blank (26; 36).

## Revendications

1. Procédé de fabrication d'une bague de palier (2 ; 3) destiné à un palier de roulement (1),
la bague de palier (2 ; 3) comportant un côté piste de roulement (22 ; 32) pourvu d'au moins une piste de roulement (23 ; 33) et un côté appui (21 ; 31) destiné à venir en appui sur une structure de support, et
la bague de palier (2 ; 3) définissant un axe principal (H) du palier de roulement (1), la bague de palier (2 ; 3) comportant au moins une partie de contour (24, 34) du côté appui (21 ; 31), et la bague de palier (2 ; 3) étant fabriquée par formage à partir d'une ébauche de bague de palier (26 ; 36), **caractérisé en ce que** l'ébauche de bague de palier (26 ; 36) comporte, avant le formage, un profil de surface (28 ; 38) qui est formé dans l'ébauche de bague de palier (26 ; 36), le profil de surface (28 ; 38) formant, après le formage, l'au moins une partie de contour (24 ; 34) dans le côté appui (21 ; 31) de la bague de palier (2 ; 3).

2. Procédé selon la revendication 1, **caractérisé en ce que** la partie de contour (24 ; 34) forme un profil qui s'étend partiellement, par endroits ou complètement autour de l'axe principal (H).

3. Procédé selon la revendication 1 ou 2, **caractérisé en ce que** la partie de contour (24 ; 34) est réalisée sous la forme d'un contour en contre-dépouille et/ou d'un contour en élévation par rapport à la direction axiale de l'axe principal (H).

4. Procédé selon la revendication 3, **caractérisé en ce que** le contour en contre-dépouille comporte au moins une rainure périphérie et/ou au moins une poche et/ou au moins un évidement (211, 311) pourvu d'une périphérie ronde ou rectangulaire et/ou au moins une cannelure.

5. Procédé selon l'une des revendications 3 ou 4, **caractérisé en ce que** le contour en élévation comporte au moins un bourrelet périphérique (315) et/ou au moins un mamelon (313) et/ou au moins une chaîne de mamelons.

6. Procédé selon l'une des revendications 3 à 5, **caractérisé en ce que** le contour en contre-dépouille de la partie de contour (24 ; 34) est formé avec une profondeur de contour (h1) d'au moins 0,5 mm.

7. Procédé selon l'une des revendications 3 à 6, **caractérisé en ce que** le contour en élévation de la partie de contour (24 ; 34) est formé avec une hauteur de contour (h2) d'au moins 0,5 mm.

8. Procédé selon l'une des revendications précédentes, **caractérisé en ce que** le formage est réalisé sous la forme d'un formage à froid, en particulier d'une extrusion à froid.

9. Procédé selon l'une des revendications précédentes, **caractérisé en ce que** l'ébauche de bague de palier (26 ; 36) est réalisée sous la forme d'un disque annulaire (25 ; 35), le profil de surface (28 ; 38) étant formé sur une première face d'extrémité (27 ; 37) du disque annulaire (25 ; 35).

10. Procédé selon la revendication 9, **caractérisé en ce qu'**un autre profil de surface (210 ; 310) est ou en train d'être formé sur une deuxième face d'extrémité (29 ; 39) du disque annulaire (25 ; 35), l'autre profil de surface (210 ; 310) formant la piste de roulement (23 ; 33) après le formage.

11. Procédé selon la revendication 10, **caractérisé en ce que** l'autre profil de surface (210 ; 310) est ou en train d'être réalisé sous la forme d'au moins un autre contour en contre-dépouille et **en ce que** l'au moins une piste de roulement (23 ; 33) est formée par l'au moins un autre contour en contre-dépouille.

12. Procédé selon l'une des revendications précédentes, **caractérisé en ce qu'**une forme finale de la partie de contour (24 ; 34) est formée par le profil de surface (28 ; 38) et le formage et/ou **en ce qu'**une forme finale de l'au moins une piste de roulement (23 ; 33) est formée par l'autre profil de surface (210 ; 310) et le formage.

13. Palier de roulement (1) comportant au moins une bague de palier (2 ; 3), la bague de palier (2 ; 3) étant réalisée par le procédé selon l'une au moins des revendications précédentes, la bague de palier (2 ; 3) comportant un côté piste de roulement (22 ; 32), au moins une piste de roulement (23 ; 33) destinée à des éléments roulants étant disposée du côté piste de roulement (22 ; 32), la bague de palier (2 ; 3) comportant un côté appui (21 ; 31) permettant à la bague de palier (2 ; 3) de venir en appui sur une structure de support, et la bague de palier (2 ; 3) étant réalisée par formage, en particulier par extrusion à froid, à partir d'une ébauche de bague de palier (26 ; 36),
**caractérisé en ce que**
la bague de palier (2 ; 3) comporte au moins une partie de contour (24 ; 34) du côté appui (21 ; 31), la partie de contour (24 ; 34) étant formée par un profil de surface (28 ; 38) qui a été formé dans l'ébauche de bague de palier (26 ; 36).
